# EUROPÄISCHE PATENTSCHRIFT

(11) **EP 0 360 013 B1**
(45) Veröffentlichungstag und Bekanntmachung des Hinweises auf die Patenterteilung: **10.03.1993**
(21) Anmeldenummer: 89115398.3
(22) Anmeldetag: 21.08.1989
(51) Int. Cl.: B60T 8/44, B60T 8/40

(54) **Blockiergeschützte Kraftfahrzeugbremsanlage**
Block-proof brake arrangement for motor vehicles
Installation de freinage à anti-blocage pour véhicules automobiles

(30) Priorität: 17.09.1988 DE 3831667
(43) Veröffentlichungstag der Anmeldung: 28.03.1990
(73) Patentinhaber: ALFRED TEVES GmbH, 60441 Frankfurt (DE)
(72) Erfinder: Rüffer, Manfred, D-6231 Sulzbach (DE)

(56) Entgegenhaltungen:
- EP-A- 0 130 501
- DE-A- 3 619 793
- FR-A- 2 535 662
- FR-A- 2 574 356
- GB-A- 1 162 855
- GB-A- 2 162 605
- GB-A- 2 198 201

## Beschreibung

Die Erfindung betrifft eine blockiergeschützte Kraftfahrzeugbremsanlage mit einem wirkungsmäßig zwischen Bremspedal und Hauptbremszylinder angeordneten Vakuumbremskraftverstärker mit mindestens zwei in einem Verstärkergehäuse durch eine bewegliche Wand voneinander getrennten Arbeitskammern, von denen die erste über ein Magnetventil mit einer Unterdruckquelle bzw. der Atmosphäre verbindbar und die zweite über ein mittels eines mit dem Bremspedal gekoppelten Eingangsglieds betätigbares Steuerventil belüftbar ist, um eine zur Bremspedalkraft proportionale Verstärkungskraft zu erzeugen, wobei an einen Primär- und einen Sekundärdruckraum des Hauptbremszylinders über Bremsleitungen Radbremszylinder angeschlossen sind, mit den zu bremsenden Rädern zugeordneten Sensoren, die das Drehverhalten der Räder erfassen, um ein Blockieren festzustellen, und deren Ausgangssignale einer zentralen Regelelektronik zuführbar sind, mit deren Steuersignalen zur Schlupfregelung sowohl in die Bremsleitungen eingefügte elektromagnetisch betätigbare Druckmittel-Einlaß- und Auslaßventile als auch das Magnetventil steuerbar sind.

Eine derartige Kraftfahrzeugbremsanlage ist z.B. aus dem Dokument GB-A-2 162 605 bekannt. Das Eingangsglied des darin offenbarten Unterdruckbremskraftverstärkers trägt einen mit einem pneumatischen Differenzdruck beaufschlagbaren Kolben, der entgegen der Betätigungsrichtung mittels einer Feder vorgespannt ist und der zwei pneumatische Kammern voneinander trennt, die in unbetätigter Stellung mit einem Unterdruck beaufschlagt werden.

In einem Regelfall wird eine der beiden Kammern belüftet, so daß der auf den Kolben einwirkende Differenzdruck eine entgegen der Betätigungskraft gerichtete Rückhaltekraft erzeugt, die über eine zweite Feder auf das Eingansglied übertragen wird, um eine weitere Erhöhung des in der Bremsanlage herrschenden hydraulischen Druckes zu verhindern.

Als nachteilig bei der vorbekannten Bremsanlage ist die Tatsache anzusehen, daß diese im Schlupfregelfall auf das Bremspedal wirkende Rückhaltekraft dem Differenzdruck sowie dem Kolbendurchmesser proportional und daher begrenzt ist. Demnach droht bei einem Abfall des in der evakuierten Kammer herrschenden Unterdruckes oder bei einer Panikbremsung die Gefahr einer Übertretung der Pedalrückhaltekraft, die eine erhebliche Beeinträchtigung des Regelvorgangs mit sich bringt, die bis zu einem Blockieren der Kraftfahrzeugräder führen kann.

Es ist daher Aufgabe der vorliegenden Erfindung, eine schlupfgeregelte Kraftfahrzeugbremsanlage der eingangs genannten Gattung so auszubilden, daß die oben erwähnte Gefahr weitgehend vermieden wird.

Diese Aufgabe wird erfindungsgemäß dadurch gelöst, daß am Verstärkergehäuse ein Simulatorgehäuse getrennt von der beweglichen Wand stationär angeordnet ist und eine hydraulische Kammer aufweist, deren Verbindung mit einem drucklosen Druckmittelvorratsbehälter freigebbar ist und in der ein mit der beweglichen Wand in Wirkverbindung stehender Simulatorkolben axial verschiebbar geführt ist, an dem das Eingangsglied abgestützt ist. Diese Maßnahme bringt eine wesentliche Erhöhung der Funktionssicherheit der Bremsanlage. Die stationäre Anordnung des Simulatorgehäuses mit dem darin geführten Steuerventilgehäuse ermöglicht es, eine schwächere Eingangsglied-Rückholfeder zu verwenden.

Eine vorteilhafte Weiterbildung des Erfindungsgegenstandes sieht vor, daß der Simulatorkolben im Simulatorgehäuse einen pneumatischen Raum begrenzt, der durch eine am Steuerventilgehäuse befestigte Membranwand in einen evakuierbaren bzw. belüftbaren ersten Druckraum und einen zweiten Druckraum unterteilt ist. wobei der erste Druckraum mittels einer Ventilanordnung mit der Atmosphäre verbindbar ist. Da die beiden Druckräume in Bremslösestellung sowohl miteinander als auch mit der belüftbaren zweiten Arbeitskammer des Vakuumbremskraftverstärkers in Verbindung stehen, wird durch diese Maßnahme auf eine einfache Art eine Antriebsschlupfregelung ermöglicht.

Eine sinnvolle Ergänzung der erfindungsgemäßen Bremsanlage wird dadurch erreicht, daß die Ventilanordnung mittels eines Zündschlüssels, beispielsweise durch dessen Abziehen, aktivierbar ist, wodurch eine zuverlässig arbeitende Diebstahlsicherung realisiert wird.

Weitere Merkmale, Vorteile und Anwendungsmöglichkeiten der Erfindung gehen aus den Unteransprüchen und der folgenden Beschreibung eines Ausführungsbeispieles anhand der beigefügten Zeichnung hervor. In der Zeichnung zeigt:
Fig. 1 eine schematische Darstellung einer Kraftfahrzeugbremsanlage nach der Erfindung;
Fig. 2 einen Schnitt durch ein Ausführungsbeispiel eines Vakuumbremskraftverstärkers.

In den verschiedenen Figuren der Zeichnung sind einander entsprechende Bauteile mit gleichen Bezugszeichen bezeichnet.

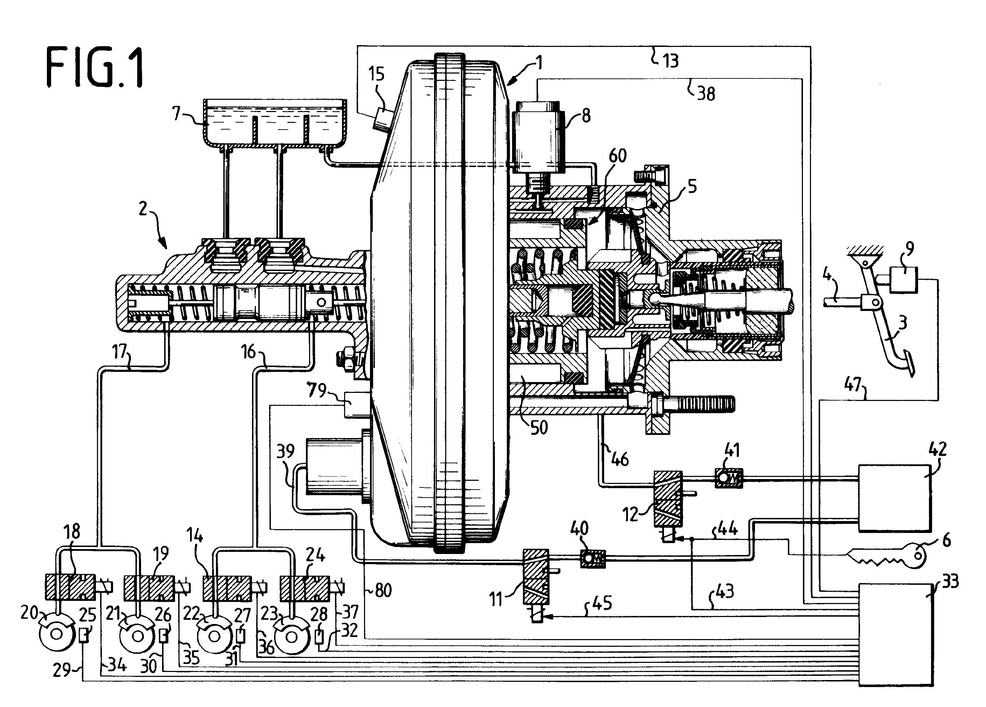

Fig. 1 zeigt eine blockiergeschützte Kraftfahrzeugsbremsanlage mit einem Vakuumbremskraftverstärker 1, der über ein Eingangsglied 4 in bekannter Weise mit einem Bremspedal 3 verbunden ist. Auf der dem Eingangsglied 4 abgewandten Seite des Vakuumbremskraftverstärkers 1 ist ein Tandem-Hauptbremszylinder 2 vorgesehen, der mit einem Druckmittelsvorratsbehälter 7 in Verbindung steht. An die Druckräume des Tandem-Hauptbremszylinders 2 ist ein erster und ein zweiter Bremskreis 17 bzw. 16 angeschlossen.

Der erste Bremskreis 17 verbindet über zwei Magnetventile 18,19, die als 2/2-Wegeventile ausgebildet sind, die Radbremszylinder der nur schematisch dargestellten zwei Radbremsen 20 bzw. 21 mit dem Tandem-Hauptbremszylinder 2. Jedes der beiden Magnetventile 18,19 ist hierbei einer der beiden Radbremsen 20 bzw. 21 zugeordnet. Der zweite Bremskreis 16 verbindet die Radbremszylinder der ebenfalls nur schematisch dargestellten weiteren zwei Radbremsen 22,23 mit dem Tandem-Hauptbremszylinder 2 über zwei weitere Magnetventile 14,24, die ebenfalls als 2/2-Wegeventile ausgebildet sind.

Den Vorder- und Hinterradbremsen 20,21,22 und 23 ist jeweils ein Sensor 25,26,27 bzw. 28 zugeordnet, die über entsprechende Signalleitungen 29,30,31 bzw. 32 mit einer zentralen Regelelektronik 33 verbunden sind. Die Sensoren 25,26,27 und 28, die beispielsweise als induktive Meßwertaufnehmer ausgebildet sein können, überwachen das Raddrehverhalten und liefern entsprechende Signale über die Signalleitungen 29,30,31 bzw. 32 an die Regelelektronik 33. Die Regelelektronik 33 ist über Steuerleitungen 34,35,36,37 mit den Magnetventilen 18,19 bzw. 14,24 verbunden, um diese in Abhängigkeit von den Sensorsignalen zu betätigen.

An die hauptzylinderseitige Arbeitskammer des Vakuumbremskraftverstärkers 1 ist über eine pneumatische Leitung 39 eine Ventilanordnung 11 angeschlossen, die in Abhängigkeit von den Steuersignalen der Regelelektronik 33 deren Evakuieren bzw. Belüften ermöglicht. Die Ventilanordnung 11 wird durch ein 3/2-Wegeventil gebildet, das mittels einer Steuerleitung 45 mit der Regelelektronik 33 in Verbindung steht und über ein Rückschlagventil 40 an eine Unterdruckquelle 42 angeschlossen ist.

Auf der bremspedalseitigen Hälfte des Verstärkergehäuses befindet sich ein stationär angeordnetes Simulatorgehäuse 5, in dem eine hydraulische Kammer 50 gebildet ist, die über eine schematisch dargestellte Leitung mit dem Druckmittelvorratsbehälter 7 in Verbindung steht. Diese Verbindung ist mittels eines Elektromagnetventils 8 absperrbar bzw. freigebbar, das über eine Steuerleitung 38 erregbar ist. Im Inneren des Simulatorgehäuses 5 ist außerdem ein pneumatischer Raum 60 ausgebildet, der über eine pneumatische Leitung 46 und eine Ventilanordnung 12 wahlweise mit der Unterdruckquelle 42 oder der Atmosphäre verbindbar ist. Die Ventilanordnung 12 ist im dargestellten Beispiel durch ein elektromagnetisch betätigbares 3/2-Wegeventil gebildet, dessen Unterdruckeingangsanschluß über ein zweites Rückschlagventil 41 an die Unterdruckquelle 42 angeschlossen ist. Das 3/2-Wegeventil ist wahlweise entweder durch die zentrale Regelelektronik 33 über eine Steuerleitung 43 oder durch Abziehen eines im Kraftfahrzeug vorhandenen Zündschlüssels betätigbar, der in Fig. 1 schematisch dargestellt und mit dem Bezugszeichen 6 versehen ist.

An die hauptzylinderseitige Arbeitskammer des Vakuumbremskraftverstärkers 1 ist auch ein Drucksensor 15 angeschlossen, dessen Ausgangssignal über eine Signalleitung 13 der zentralen Regelelektronik 33 zuführbar ist. Die Aufgabe des Drucksensors 15 geht aus der nachfolgenden Beschreibung hervor.

Das Bremspedal 3 ist schließlich mit dem Betätigungselement eines lediglich schematisch angedeuteten Wegschalters 9 gekoppelt, der mittels einer Signalleitung 47 mit der zentralen Regelelektronik 33 in Verbindung steht und dessen Aufgabe im Zusammenhang mit der Funktion der erfindungsgemäßen Kraftfahrzeugbremsanlage näher erläutert wird.

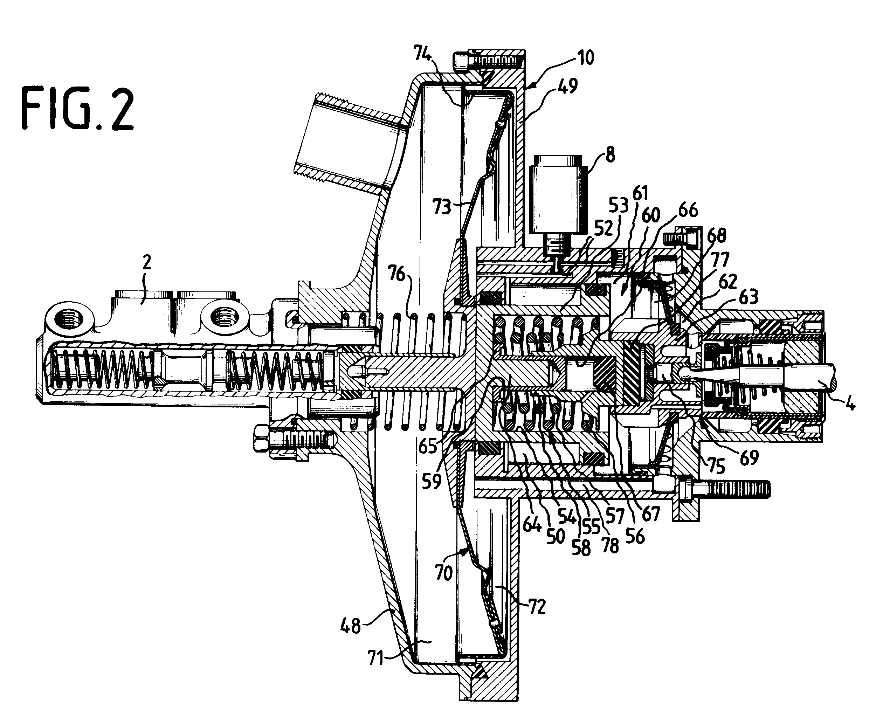

Nach Fig. 2 weist der Vakuumbremskraftverstärker 1 zwei schalenförmige, mit ihren offenen Seiten zusammengebaute Gehäuseteile 48,49 auf, die ein Verstärkergehäuse 10 bilden. Das in Fig. 2 linke, mit einem näher nicht gezeigten pneumatischen Anschluß versehene Gehäuseteil 48 ist fest mit dem Tandem-Hauptbremszylinder 2 verbunden, während das rechte Gehäuseteil 49 das Simulatorgehäuse 5 trägt, das ein Steuerventilgehäuse 63 des Vakuumbremskraftverstärkers 1 gleitend und abgedichtet geführt hält.

Der Innenraum des Verstärkergehäuses 10 wird durch eine darin angeordnete, aus einem Membranteller 73 und einer daran anliegenden Rollmembran 74 bestehende bewegliche Wand 70 in eine erste Arbeitskammer 71 sowie eine zweite Arbeitskammer 72 unterteilt, die bei einer Normalbremsung mittels eines im Steuerventilgehäuse 63 angeordneten Steuerventils 69 belüftet wird. Das an sich bekannte Steuerventil 69 wird von einem mit dem Eingangsglied 4 verbundenen Ventilkolben 75 betätigt, wobei zum Zurückstellen der beweglichen Wand 70 eine Rückstellfeder 76 vorgesehen ist, die zwischen dem vorderen Gehäuseteil 48 und der beweglichen Wand 70 eingespannt ist.

Im Inneren des vorzugsweise mit dem bremspedalseitigen Gehäuseteil 49 einstückig ausgebildeten Simulatorgehäuses 5 ist die im Zusammenhang mit Fig. 1 oben erwähnte hydraulische Kammer 50 durch einen darin verschiebbar geführten, mit der beweglichen Wand 70 in Wirkverbindung stehenden Simulatorkolben 53 begrenzt. Die mittels des Elektromagnetventils 8 absperrbare bzw. freigebbare hydraulische Verbindung der Kammer 5 mit dem Druckmittelvorratsbehälter 7 (Fig. 1) wird durch im Simulatorgehäuse 5 ausgebildete Kanäle 52 gebildet. Der Simulatorkolben 53 ist dabei vorzugsweise mit einer axialen Ausnehmung 54 versehen, die ein Simulatorfederpaket 55 aufnimmt, das durch zwei koaxial ineinander angeordnete Druckfedern 56,57 unterschiedlicher Länge gebildet ist. Die Anordnung der beiden Druckfedern 56,57 ist dabei vorzugsweise derart getroffen, daß die längere, radial außenliegende Druckfeder 56 zwischen dem Boden der Ausnehmung 54 und einer im Steuerventilgehäuse 63 gehaltenen Tellerhülse 58 eingespannt ist, während die kürzere, radial innenliegende Druckfeder 57 in der Ausnehmung 54 durch einen radialen Bund 65 einer Führungshülse 59 zentriert wird, die sich in eine axiale Ausnehmung 66 der Tellerhülse 58 hinein erstreckt und auf einem Zapfen 64 des Simulatorkolbens 53 aufgeschoben ist. Am Boden der axialen Ausnehmung 66 befindet sich ein elastischer Federblock 67, wobei die dem Federblock 67 abgewandte Stirnfläche der Federhülse 58 an einer gummielastischen im Steuerventilgehäuse 63 untergebrachten Reaktionsscheibe 77 anliegt, an der sich unter Zwischenschaltung einer näher nicht bezeichneten Scheibe der Ventilkolben 75 axial abstützt.

Durch den Simulatorkolben 53 ist im Simulatorgehäuse 5 der pneumatische Raum 60 (Fig. 1) begrenzt, der mittels einer am Steuerventilgehäuse 63 befestigten Membranwand 68 in einen ersten Druckraum 61 sowie einen zweiten Druckraum 62 unterteilt ist, die in Bremslösestellung mittels im Steuerventilgehäuse 63 ausgebildeter, näher nicht bezeichneter Kanäle miteinander in Verbindung stehen, wobei der zweite Druckraum 62 mittels einer im Simulatorgehäuse 5 ausgebildeten pneumatischen Verbindung 78 mit der zweiten Arbeitskammer 72 des Vakuumbremskraftverstärkers 1 in Verbindung steht.

Die Funktionsweise der in der Zeichnung dargestellten erfindungsgemäßen Kraftfahrzeugbremsanlage wird nachfolgend beschrieben:
In der Ausgangsposition herrscht in den beiden Arbeitskammern 71 und 72 der Unterdruck der Unterdruckquelle 42, so daß die bewegliche Wand 70 druckausgeglichen ist und durch die Rückstellfeder 76 am Anschlag am hinteren Gehäuseteil 49 gehalten wird. Der gleiche Unterdruck herrscht auch im pneumatischen Raum 60 im Simulatorgehäuse 5, wobei die Verbindung 52 zwischen der hydraulischen Kammer 50 und dem drucklosen Druckmittelvorratsbehälter 7 gesperrt ist.

Wird nun beim Bremsen das Bremspedal 3 betätigt, so werden durch die Krafteinwirkung das Eingangsglied 4 mit dem Steuerkolben 75 nach links verschoben, wodurch das Steuerventil 69 betätigt wird. Dadurch wird an der beweglichen Wand 70 eine fußkraftproportionale Druckdifferenz eingesteuert, die eine Verstärkungskraft erzeugt, die auf den Primärkolben des Hauptbremszylinders 2 übertragen wird, um einen hydraulischen Druck in den beiden Druckräumen des Hauptbremszylinders 2 aufzubauen, der über die Bremskreise 16 und 17 zu den einzelnen Radbremsen 20,21,22 und 23 weitergeleitet wird.

Dabei wird zunächst die längere radial außenliegende Druckfeder 56 und anschließend auch die kürzere innenliegende Druckfeder 57 zusammengedrückt, bis schließlich die Stirnseite der Führungshülse 59 den elastischen Federblock 67 berührt. Durch diesen Vorgang wird in der abgesperrten hydraulischen Kammer 50 ein hydraulischer Druck aufgebaut. Der Simulatorkolben 53 bewegt sich bei der Betätigung nicht, so daß die bewegliche Wand 70 des Vakuumbremskraftverstärkers 1 lediglich die aus der darauf einwirkenden Druckdifferenz resultierende Kraft aufbringen kann und kräftemäßig vom Eingangsglied 4 entkoppelt wird.

Wird während eines Bremsvorganges von einem oder mehreren der Sensoren 25,26,27,28 ein Blockieren des zugeordneten Rades festgestellt, so muß der im Hauptbremszylinder 2 aufgebaute Druck zumindest teilweise abgebaut werden. Es wird angenommen, daß die auf das Bremspedal 3 einwirkende Kraft konstant bleibt. Nachdem der zentralen Regelelektronik 33 von einem der Sensoren die oben erwähnte Blockierneigung gemeldet wurde, erzeugt diese Umschaltsignale, die ein Umschalten der Ventilanordnung 11 und somit ein Belüften der hauptbremszylinderseitigen Arbeitskammer 71 des Vakuumbremskraftverstärkers 1 bewirken. Da nunmehr auf die bewegliche Wand 70 keine Druckdifferenz einwirkt, (die bremspedalseitige Arbeitskammer 72 steht nach wie vor unter dem Atmosphärendruck) verschwindet auch die dadurch bedingte Verstärkungskraft. Die beschriebene Wegnahme der Verstärkungskraft hat demnach eine Druckreduzierung im Hauptbremszylinder 2 zur Folge.

Durch die Verwendung des Drucksensors 15 wird gewährleistet, daß, wenn ein bestimmtes Unterdruckniveau unterschritten wird, die Regelfunktion der erfindungsgemäßen Bremsanlage durch die zentrale Regelelektronik 33 abgeschaltet wird. Gleichzeitig bewirkt das Ausgangssignal des Drucksensors 15 ein Umschalten des Elektromagnetventils 8, das die hydraulische Verbindung (Kanäle 52) zwischen der hydraulischen Kammer 50 und dem Druckmittelvorratsbehälter 7 freigibt. Da nunmehr der Simulatorkolben 53 verschoben werden kann, wird die "restliche" Verstärkungskraft durch die Betätigungskraft am Bremspedal unterstützt. Eine Schlupfregelung kann unter diesen Umständen nicht mehr stattfinden.

Aufgrund der fehlenden Kopplung zwischen dem Hauptbremszylinder und dem Eingangsglied bzw. dem Bremspedal kann, z.B. wenn die Bremsanlage nicht richtig belüftet ist oder bei einem Kreisausfall der Fall auftreten, in dem die bewegliche Wand 70 des Vakuumbremskraftverstärkers 1 einen großen Hub macht, während der Bremspedalweg gleich bleibt. Deshalb ist am Vakuumbremskraftverstärker 1 ein zweiter Wegschalter 79 vorgesehen, dessen Ausgangssignal über eine weitere Signalleitung 80 der zentralen Regelelektronik 33 zuführbar ist. In der Regelelektronik 33 wird das Ausgangssignal des zweiten Wegschalters 79 mit dem des ersten Wegschalters 9 verglichen, wobei bei unzulässiger Abweichung eine Warnung erfolgt. Diese Maßnahme hat eine wesentliche Erhöhung der Betriebssicherheit der Bremsanlage zur Folge.

### Bezugszeichenliste

1 Vakuumbremskraftverstärker
2 Hauptbremszylinder
3 Bremspedal
4 Eingangsglied
5 Simulatorgehäuse
6 Zündschlüssel
7 Druckmittelvorratsbehälter
8 Elektromagnetventil
9 Wegschalter
10 Verstärkergehäuse
11 Ventil
12 Ventil
13 Signalleitung
14 Magnetventil
15 Drucksensor
16 Bremsleitung
17 Bremsleitung
18 Magnetventil
19 Magnetventil
20 Radbremse
21 Radbremse
22 Radbremse
23 Radbremse
24 Magnetventil
25 Sensor
26 Sensor
27 Sensor
28 Sensor
29 Signalleitung
30 Signalleitung
31 Signalleitung
32 Signalleitung
33 zentrale Regelelektronik
34 Steuerleitung
35 Steuerleitung
36 Steuerleitung
37 Steuerleitung
38 Steuerleitung
39 pneumatische Leitung
40 Rückschlagventil
41 Rückschlagventil
42 Unterdurckquelle
43 Steuerleitung
44 Steuerleitung
45 Steuerleitung
46 pneumatische Leitung
47 Signalleitung
48 Gehäuseteil
49 Gehäuseteil
50 hydraulische Kammer
51 Wegschalter
52 Verbindung
53 Simulatorkolben
54 Ausnehmung
55 Simulatorfederpaket
56 Druckfeder
57 Druckfeder
58 Tellerhülse
59 Führungshülse
60 Raum
61 erster Druckraum
62 zweiter Druckraum
63 Steuerventilgehäuse
64 Zapfen
65 Bund
66 Ausnehmung
67 Federblock
68 Membranwand
69 Steuerventil
70 bewegliche Wand
71 erste Arbeitskammer
72 zweite Arbeitskammer
73 Membranteller
74 Rollmembran
75 Ventilkolben
76 Rückstellfeder
77 Reaktionsscheibe
78 Verbindung
79 Wegschalter
80 Signalleitung

## Patentansprüche

1. Blockiergeschützte Kraftfahrzeugbremsanlage mit einem wirkungsmäßig zwischen Bremspedal (3) und Hauptbremszylinder (2) angeordneten Vakuumbremskraftverstärker (1) mit mindestens zwei in einem Verstärkergehäuse (10) durch eine bewegliche Wand (70) voneinander getrennten Arbeitskammern (71,72), von denen die erste (71) über ein Magnetventil (11) mit einer Unterdruckquelle (42) bzw. der Atmosphäre verbindbar und die zweite (72) über ein mittels eines mit dem Bremspedal (3) gekoppelten Eingangsglieds (4) betätigbares Steuerventil (69) belüftbar ist, um eine zur Bremspedalkraft proportionale Verstärkungskraft zu erzeugen, wobei an einen Primär- und einen Sekundärdruckraum des Hauptbremszylinders über Bremsleitungen (16,17) Radbremszylinder (20,21,22,23) angeschlossen sind, mit den zu bremsenden Rädern zugeordneten Sensoren (25,26,27,28) , die das Drehverhalten der Räder erfassen, um ein Blockieren festzustellen, und deren Ausgangssignale einer zentralen Regelelektronik (33) zuführbar sind, mit deren Steuersignalen zur Schlupfregelung sowohl in die Bremsleitungen (16,17) eingefügte elektromagnetisch betätigbare Druckmittel-Einlaß- und Auslaßventile (14,18,19,24) als auch das Magnetventil (11) steuerbar sind, dadurch **gekennzeichnet,** daß am Verstärkergehäuse (10) ein Simulatorgehäuse (5) getrennt von der beweglichen Wand (70) stationär angeordnet ist, und eine hydraulische Kammer (50) aufweist, deren Verbindung (52) mit einem drucklosen Druckmittelvorratsbehälter (7) freigebbar ist und in der ein mit der beweglichen Wand (70) in Wirkverbindung stehender Simulatorkolben (53) axial verschiebbar geführt ist, an dem das Eingangsglied (4) abgestützt ist.

2. Blockiergeschützte Kraftfahrzeugbremsanlage nach Anspruch 1, dadurch **gekennzeichnet,** daß der Simulatorkolben (53) eine axiale Ausnehmung (54) aufweist, die ein Simulatorfederpaket (55) aufnimmt.

3. Blockiergeschützte Kraftfahrzeugbremsanlage nach Anspruch 2, dadurch **gekennzeichnet,** daß das Simulatorfederpaket (55) durch zwei ineinander angeordnete Druckfedern (56,57) unterschiedlicher Länge gebildet ist.

4. Blockiergeschützte Kraftfahrzeugbremsanlage nach Anspruch 3, dadurch **gekennzeichnet,** daß die radial außenliegende Druckfeder (56) an einer Tellerhülse (58) abgestützt ist, die einerseits in einem Steuerventilgehäuse (63) und andererseits durch eine an einem Zapfen (64) des Simulatorkolbens (53) aufgesteckte Führungshülse (59) geführt ist.

5. Blockiergeschützte Kraftfahrzeugbremsanlage nach Anspruch 4, dadurch **gekennzeichnet,** daß die Führungshülse (59) einen radialen Bund (65) aufweist, der die radial innenliegende Druckfeder (57) im Simulatorkolben (53) zentriert.

6. Blockiergeschützte Kraftfahrzeugbremsanlage nach Anspruch 4, dadurch **gekennzeichnet,** daß die Führungshülse (59) in eine axiale Ausnehmung (66) der Tellerhülse (58) hineingreift, die einen elastischen Federblock (67) aufnimmt.

7. Blockiergeschützte Kraftfahrzeugbremsanlage nach einem der vorhergehenden Ansprüche, dadurch **gekennzeichnet,** daß der Simulatorkolben (53) im Simulatorgehäuse (5) einen pneumatischen Raum (60) begrenzt, der durch eine am Steuerventilgehäuse (63) befestigte Membranwand (68) in einen evakuierbaren bzw. belüftbaren ersten Druckraum (61) und einen zweiten Druckraum (62) unterteilt ist.

8. Blockiergeschützte Kraftfahrzeugbremsanlage nach Anspruch 7, dadurch **gekennzeichnet,** daß der zweite Druckraum (62) mit der zweiten Arbeitskammer (72) des Vakuumbremskraftverstärkers (1) verbunden ist.

9. Blockiergeschützte Kraftfahrzeugbremsanlage nach einem der vorhergehenden Ansprüche, dadurch **gekennzeichnet,** daß das Steuerventilgehäuse (63) im Simulatorgehäuse (5) abgedichtet geführt ist.

10. Blockiergeschützte Kraftfahrzeugbremsanlage nach Anspruch 7 und 8, dadurch **gekennzeichnet,** daß der erste Druckraum (61) mittels einer Ventilanordnung (42) bzw. mit der Atmosphäre verbindbar ist.

11. Blockiergeschützte Kraftfahrzeugbremsanlage nach Anspruch 1, dadurch **gekennzeichnet,** daß die Verbindung (52) der hydraulischen Kammer (50) mit dem Druckmittelvorratsbehälter (49) mittels eines Elektromagnetventils (8) absperr- bzw. freigebbar ist.

12. Blockiergeschützte Kraftfahrzeugbremsanlage nach einem der vorhergehenden Ansprüche, dadurch **gekennzeichnet,** daß an die erste Arbeitskammer (71) des Vakuumbremskraftverstärkers (1) ein Drucksensor (15) angeschlossen ist, dessen Ausgangssignale der zentralen Regelelektronik (33) zuführbar sind.

13. Blockiergeschützte Kraftfahrzeugbremsanlage nach einem der vorhergehenden Ansprüche, dadurch **gekennzeichnet,** daß der Betätigungsweg des Bremspedals (3) mittels eines Wegschalters (9) feststellbar ist.

14. Blockiergeschützte Kraftfahrzeugbremsanlage nach Anspruch 10, dadurch **gekennzeichnet,** daß die Ventilanordnung (12) mittels eines Zündschlüssels (6), vorzugsweise durch dessen Abziehen, aktivierbar ist.

## Claims

1. An anti-locking brake system for automotive vehicles with a vacuum brake force booster (1) operatively disposed between brake pedal (3) and master brake cylinder (2), comprising at least two working chambers (71, 72) in a booster housing (10) separated from one another by a movable wall (70), with the first (71) of said working chambers being connectible with a vacuum source (42) or with the atmosphere through a magnetic valve (11), and the second (72) of said working chambers being capable of being vented by means of a control valve (69) actuatable by an inlet member (4) coupled to the brake pedal (3) in order to generate a boosting force proportional to the brake pedal force, and with wheel brake cylinders (20, 21, 22, 23) being in communication with a primary and a secondary pressure chamber of the master brake cylinder via brake conduits (16, 17), comprising sensors (25, 26, 27, 28) associated to the wheels to be braked and detecting the rotating pattern of the wheels to determine a locking tendency, with the output signals of the sensors being capable of being supplied to a central electronic controller (33), the control signals of which, for slip control purposes, are capable to control both electromagnetically actuatable pressure fluid inlet and outlet valves (14, 18, 19, 24) inserted into the brake coduits (16, 17) as well as the magnetic valve (11),
**characterized** in that a simulator housing (5) is arranged stationarily on the booster housing (10) separated from the movable wall (70) and comprises a hydraulic chamber (50), the communication (52) of which to a non-pressurized pressure fluid reservoir (7) is adapted to be opened, and wherein a simulator piston (53) being in operative connection with the movable wall (70) is guided axially slidably, on which piston the inlet member (4) is supported.

2. An anti-locking brake system for automotive vehicles as claimed in claim 1,
**characterized** in that the simulator piston (53) exhibits an axial recess (54) accommodating a simulator spring package (55).

3. An anti-locking brake system for automotive vehicles as claimed in claim 2,
**characterized** in that the simulator spring package (55) is formed by two nesting compression springs (56, 57) of varying length.

4. An anti-locking brake system for automotive vehicles as claimed in claim 3,
**characterized** in that the radially outwardly disposed compression spring (56) is supported on a disk sleeve (58) which, on the one hand, is guided in a control valve housing (63) and, on the other hand, is guided through a guide sleeve (59) mounted on a pin (64) of the simulator piston (53).

5. An anti-locking brake system for automotive vehicles as claimed in claim 4,
**characterized** in that the guide sleeve (59) exhibits a radial collar (65) centering the radially inwardly disposed compression spring (57) in the simulator piston (53).

6. An anti-locking brake system for automotive vehicles as claimed in claim 4,
**characterized** in that the guide sleeve (59) engages an axial recess (66) of the disk sleeve (58) accommodating a resilient spring block (67).

7. An anti-locking brake system for automotive vehicles as claimed in any one of the preceding claims,
**characterized** in that the simulator piston (53) in the simulator housing (5) confines a pneumatic chamber (60) subdivided by a diaphragm wall (68) fixed to the control valve housing (63) into a first pressure chamber (61) capable of being evacuated and vented, respectively, and a second pressure chamber (62).

8. An anti-locking brake system for automotive vehicles as claimed in claim 7,
**characterized** in that the second pressure chamber (62) is in communication with the second working chamber (72) of the vacuum brake force booster (1).

9. An anti-locking brake system for automotive vehicles as claimed in any one of the preceding claims,
**characterized** in that the control valve housing (63) is sealingly guided in the simulator housing (5).

10. An anti-locking brake system for automotive vehicles as claimed in claims 7 and 8,
**characterized** in that the first pressure chamber (61) is connectible to the atmosphere through a valve assembly (12).

11. An anti-locking brake system for automotive vehicles as claimed in claim 1,
**characterized** in that the communication (52) of the hydraulic chamber (50) to the pressure fluid reservoir (49) is adapted to be shut and opened, respectively, by means of an electromagnetic valve (8).

12. An anti-locking brake system for automotive vehicles as claimed in any one of the preceding claims,
**characterized** in that a pressure sensor (15) is connected to the first working chamber (71) of the vacuum brake force booster (1), the output signals of which sensor can be supplied to the central electronic controller (33).

13. An anti-locking brake system for automotive vehicles as claimed in any one of the preceding claims,
**characterized** in that the actuating travel of the brake pedal (3) can be detected by a way switch (9).

14. An anti-locking brake system for automotive vehicles as claimed in claim 10,
**characterized** in that the valve assembly (12) is excitable by means of a car ignition key (6), preferably by withdrawal thereof.

## Revendications

1. Système de freinage anti-blocage pour véhicule automobile, comprenant, d'une part, un amplificateur d'effort de freinage à dépression (1), disposé en coopération fonctionnelle entre une pédale de frein (3) et un maître-cylindre de frein (2) et comportant au moins deux chambres de travail (71, 72) qui sont situées dans un boîtier d'amplificateur (10), sont séparées l'une de l'autre par une paroi mobile (70), dont la première (71) est agencée de façon à pouvoir communiquer avec une source de dépression (42) ou avec l'atmosphère par l'intermédiaire d'une valve à commande magnétique (11) et la seconde (72) est agencée de façon à pouvoir être remplie d'air par l'intermédiaire d'une valve de commande (69) agencée de façon à pouvoir être actionnée par un organe d'entrée (4) accouplé à la pédale de frein (3), afin de produire une force d'amplification proportionnelle à la force exercée sur la pédale de frein, tandis que des cylindres de freins de roues (20, 21, 22, 23) sont raccordés à une chambre de pression primaire et une chambre de pression secondaire du maître-cylindre de frein par l'intermédiaire de conduites de frein (16, 17), et, d'autre part, des capteurs (25, 26, 27, 28), qui sont associés aux roues à freiner et détectent le comportement en rotation des roues, afin de déterminer l'existence d'un blocage, et dont des signaux de sortie peuvent être envoyés à un circuit électronique central de régulation (33) fournissant des signaux de commande de régulation du glissement au moyen desquels peuvent être commandées à la fois des valves d'entrée d'agent de pression et de sortie d'agent de pression (14, 18, 19, 24), à commande électromagnétique et qui sont insérés dans les conduites de frein (16, 17), et la valve à commande magnétique (11), caractérisé en ce qu'un boîtier de simulateur (5) est disposé de façon fixe sur le boîtier d'amplificateur (10), d'une manière séparée de la paroi mobile (70), et comporte une chambre hydraulique (50) dont la liaison (52) avec un réservoir d'agent de pression (7) sans pression est agencée de façon à pouvoir être libérée et dans laquelle un piston de simulateur (53) relié en coopération fonctionnelle à la paroi mobile (70) est guidé de façon à pouvoir être déplacé axialement, l'organe d'entrée (4) prenant appui sur ce piston de simulateur (53).

2. Système de freinage anti-blocage pour véhicule automobile suivant la revendication 1, caractérisé en ce que le piston de simulateur (53) comporte une cavité axiale (54) qui sert à loger un groupe de ressorts de simulateur (55).

3. Système de freinage anti-blocage pour véhicule automobile suivant la revendication 2, caractérisé en ce que le groupe de ressorts de simulateur (55) est constitué de deux ressorts de compression (56, 57) disposés l'un à l'intérieur de l'autre et de longueurs différentes.

4. Système de freinage anti-blocage pour véhicule automobile suivant la revendication 3, caractérisé en ce que le ressort de compression radialement extérieur (56) est en appui sur une douille-cuvette (58) qui est guidée, d'une part, dans un boîtier de valve de commande (63) et, d'autre part, par une douille de guidage (59) emboîtée sur un téton (64) du piston de simulateur (53).

5. Système de freinage anti-blocage pour véhicule automobile suivant la revendication 4, caractérisé en ce que la douille de guidage (59) comporte un collet radial (65) qui sert à centrer le ressort de compression radialement intérieur (57) dans le piston de simulateur (53).

6. Système de freinage anti-blocage pour véhicule automobile suivant la revendication 4, caractérisé en ce que la douille de guidage (59) s'emboîte dans un logement axial (66) de la douille-cuvette (58) qui sert à loger un bloc-ressort élastique (67).

7. Système de freinage anti-blocage pour véhicule automobile suivant l'une des revendications précédentes, caractérisé en ce que le piston de simulateur (53) délimite dans le boîtier de simulateur (5) une chambre pneumatique (60) qui est divisée par une paroi-membrane (68), fixée sur le boîtier de valve de commande (63), en une première chambre de pression (61), agencée de façon à pouvoir être mise en dépression ou être remplie d'air, et une seconde chambre de pression (62).

8. Système de freinage anti-blocage pour véhicule automobile suivant la revendication 7, caractérisé en ce que la seconde chambre de pression (62) est reliée à la seconde chambre de travail (72) de l'amplificateur d'effort de freinage à dépression (1).

9. Système de freinage anti-blocage pour véhicule automobile suivant l'une des revendications précédentes, caractérisé en ce que le boîtier de valve de commande (63) est guidé de manière étanche dans le boîtier de simulateur (5).

10. Système de freinage anti-blocage pour véhicule automobile suivant la revendication 7 ou 8, caractérisé en ce que la première chambre de pression (61) est agencée de façon à pouvoir être reliée par l'intermédiaire d'un agencement de valve (42) ou à pouvoir être mise à l'atmosphère.

11. Système de freinage anti-blocage pour véhicule automobile suivant la revendication 1, caractérisé en ce que la liaison (52) de la chambre hydraulique (50) avec le réservoir d'agent de pression (49) est agencée de façon à pouvoir être bloquée ou libérée à l'aide d'une valve à commande par électro-aimant (8).

12. Système de freinage anti-blocage pour véhicule automobile suivant l'une des revendications précédentes, caractérisé en ce qu'à la première chambre de travail (71) de l'amplificateur d'effort de freinage à dépression (1), il est raccordé un capteur de pression (15) dont des signaux de sortie peuvent être envoyés au circuit électronique central de régulation (33).

13. Système de freinage anti-blocage pour véhicule automobile suivant l'une des revendications précédentes, caractérisé en ce que la course d'actionnement de la pédale de frein (3) peut être déterminée à l'aide d'un interrupteur de fin de course (9).

14. Système de freinage anti-blocage pour véhicule automobile suivant la revendication 10, caractérisé en ce que l'agencement de valve (12) est agencé de façon à pouvoir être activé à l'aide d'une clé de contact (6), de préférence lorsqu'on retire cette dernière.
